**Europäisches Patentamt**

**European Patent Office**

**Office européen des brevets**

(19)

(11) Veröffentlichungsnummer: **0 238 865**
**B1**

(12) **EUROPÄISCHE PATENTSCHRIFT**

(45) Veröffentlichungstag der Patentschrift: **16.05.90**

(51) Int. Cl.⁵: **A 01 C 7/04**

(21) Anmeldenummer: **87102514.4**

(22) Anmeldetag: **26.09.84**

(60) Veröffentlichungsnummer der früheren Anmeldung nach Art. 76 EPÜ: **0 141 249**

(54) Einzelkornsämaschine.

(30) Priorität: **10.10.83 DE 3336782**
**10.10.83 DE 3336823**

(43) Veröffentlichungstag der Anmeldung:
**30.09.87 Patentblatt 87/40**

(45) Bekanntmachung des Hinweises auf die Patenterteilung:
**16.05.90 Patentblatt 90/20**

(84) Benannte Vertragsstaaten:
**AT BE CH DE FR GB IT LI LU NL SE**

(56) Entgegenhaltungen:
**EP-A-0 026 926**
**DE-B-1 582 081**

(73) Patentinhaber: **Powilleit, Hansherger, Dipl.-Ing.**
**Am hohlen Berg 4**
**D-4000 Düsseldorf 12 (DE)**

(72) Erfinder: **Powilleit, Hansherger, Dipl.-Ing.**
**Am hohlen Berg 4**
**D-4000 Düsseldorf 12 (DE)**

(74) Vertreter: **König, Werner, Dipl.-Ing.**
**Habsburgerallee 23-25**
**D-5100 Aachen (DE)**

Courier Press, Leamington Spa, England.

## Beschreibung

Die Erfindung betrifft eine Einzelkornsämaschine mit einem Saatgutbehälter und mit einem scheibenförmigen, den Saatgut behälter auf einer Seite abgrenzenden Zellenrad, das an seinem Rand jeweils sowohl radial als auch in beiden Axialrich tungen offene Zellen zur Einzelaufnahme von Saatkörnern aufweist, das weitgehend von einem Gehäuse umschlossen um eine im wesentlichen horizontale Achse drehbar ist und das an seiner dem Saatgutbehälter abgewandten Seite durch eine Rückwand abgedeckt ist, wobei das Zellenrad in einem unteren Füllbereich die Saatkörner aufnimmt und unter innenseitigen Abdeckungen bis zu einer Abgabestelle mitnimmt.

Bei derartigen Einzelkornsämaschinen können die vereinzelten Saatkörner entweder von dem Zellenrad in das Erdreich abgeworfen werden oder es kann ein zusätzliches Särad vorgesehen sein, das die vereinzelten Saatkörner vom Zellenrad übernimmt und in Richtung zum Boden weiter transportiert und dort abgibt.

Es ist eine Einzelkornsämaschine bekannt (DE-AS 1 582 081), bei der der Boden des Saatgutbehälters mit dem Zellenrad einen rechten Winkel bildet und einen konischen Endabschnitt hat, der radial außerhalb des Zellenrades beginnt und über diesen hinweg vom Saatgutbehälter fort vorsteht. Der Saatgutbehälter ist in zwei Kammern aufgeteilt, in die Druckluft eingeleitet wird, um ein Nachrutschen der Samenkörner in Richtung auf die Zellen und ein Halten der Saatkörner in den Zellen herbeizuführen. Die Verwendung von Druckluft erfordert dabei einen beträchtlichen Aufwand und läßt dennoch befürchten, daß einzelne Zellen nicht oder aber doppelt besetzt werden bzw. die Saatkörner aus einzelnen Zellen in unerwünschter Weise austreten.

Der Erfindung liegt nun die Aufgabe zugrunde, eine Einzelkornsämaschine der eingangs erwähnten Art zu schaffen, die mit einfachen Mitteln die sichere Zufuhr von Samenkörnern zu einem Zellenrad ermöglicht, die Saatkörner zuverlässig in dem Zellenrad hält und eine gezielte Abgabe der Samenkörner auf den Boden oder an eine nachgeschaltete Folgebaugruppe erlaubt.

Diese Aufgabe wird bei einer Einzelkornsämaschine der eingangs erwähnten Art dadurch gelöst, daß der Saatgutbehälter einen in Richtung auf den unteren Bereich des Zellenrades hin geneigt verlaufenden Boden hat und daß der Winkel zwischen diesem Boden des Saatgutbehälters einerseits und dem Zellenrad andererseits ausgehend vom Ende des Füllbereichs bis zum Beginn der innenseitigen Abdeckung in Drehrichtung des Zellenrades zunimmt.

Allein aufgrund der Schwerkraft ergibt die Neigung des Bodens des Saatgutbehälters gegenüber dem Zellenrad ein Anpressen der Saatkörner an das Zellenrad und damit eine starke Förderung der Befüllung der einzelnen Zellen. Diese erwünschte Wirkung wird dadurch erheblich gefördert, daß zahlreiche Samenkörner aufgrund ihres Kontaktes mit der Innenfläche des Zellenrades bei dessen Drehung in Umfangsrichtung mitgenommen werden. Diese Samenkörner unterliegen damit einer Zentrifugalkraft, welche radial nach außen gegen den Boden des Saatgutbehälters wirkt und eine normal zu der Innenfläche des Zellenrades verlaufende Komponente hat, welche die Samenkörner in Richtung auf das Zellenrad, d. h. in Richtung auf dessen Zellen und in diese hinein drückt.

Wichtig ist dabei auch, daß der Winkel zwischen dem Zellenrad und dem Boden des Saatgutbehälters in Drehrichtung hin auf etwa 90° zunimmt. Dadurch wird der Befülleffekt nach Verlassen des Füllbereichs aufgehoben. Mehrfachbelegungen der einzelnen Zellen kommen deshalb überhaupt nicht vor oder werden hier beseitigt.

Mit der erfindungsgemäßen Einzelkornsämaschine lassen sich die heute üblichen Drillgeschwindigkeiten auch bei kleinen Bauabmessungen realisieren. Dabei können die Zellen so klein gehalten werden, daß auch bei langsamsten Drehzahlen eine Doppelbelegung nicht auftreten kann.

Aus den Zellen des Zellenrades können die einzelnen Saatkörner in an sich bekannter Weise unmittelbar auf dem Erdboden abgeworfen werden. Da die Saatkörner erfaßbar in den Zellen liegen, ist es aber auch möglich, die vereinzelten Saatkörner durch nachgeschaltete Bauteile aus den Zellen zu entnehmen und abstandsgetreu bis zum Erdboden zu fördern und dort abzulegen.

Der zwischen dem Boden des Saatgutbehälters und dem Zellenrad gebildete Winkel kann in dem für die Aufnahme vorgesehenen Bereich 60° betragen. Versuche haben gezeigt, daß dieser Neigungswinkel, z.B. für die Samenkörner verschiedener Zuckerrübenarten, besonders vorteilhaft ist. Für anderes Saatgut kann ein anderer Winkel vorteilhaft sein. Dieser Winkel steigt im anschließenden Bereich auf 90° an.

Die erfindungsgemäße Einzelkornsämaschine kann ferner so ausgebildet sein, daß die in Drehrichtung des Zellenrades hinten liegenden Flächen der Zellen mit der Rückwand einen spitzen Winkel bilden. So wird sichergestellt, daß die einzeln in den Zellen befindlichen Saatkörner in diesen gehalten und sicher bis zu der Stelle geführt werden, an der sie von dem Särad übernommen werden.

Die erfindungsgemäße Einzelkornsämaschine kann ferner so ausgebildet sein, daß die in Drehrichtung des Zellenrades vorn liegenden Flächen und/oder die hinten liegenden Flächen der Zellen in Drehrichtung abgeschrägt sind. Dies dient dazu, auch bei Unterschieden der Umfangsgeschwindigkeiten von Zellenrad und Särad eine sichere Übergabe der Saatkörner zu erreichen.

Schließlich kann die erfindungsgemäße Einzelkornsämaschine so ausgebildet sein, daß in Drehrichtung vor jeder Zelle auf der dem Saatgutbehälter zugewandten Fläche des Zellenrades eine Schrägfläche vorgesehen ist, die in Richtung auf die Zelle abfällt. Auf diese Weise wird die Einführung der Saatkörner in die Zellen und damit eine zuverlässige Belegung aller Zellen weiter verbessert.

Es wird auch auf die EP-A-171249 hingewiesen.

Im folgenden Teil der Beschreibung werden einige Ausführungsformen der erfindungsgemäßen Einzelkornsämaschine anhand von Zeichnungen beschrieben.

Es zeigt.

Fig. 1 eine schematische Ansicht einer Ausführungsform der erfindungsgemäßen Einzelkornsämaschine mit einem dem Zellenrad nachgeschalteten Särad,

Fig. 2 einen in einer senkrechten Ebene liegenden Teilschnitt durch das untere Ende des Saatgutbehälters und des Zellenrades der erfindungsgemäßen Einzelkornsämaschine,

Fig. 3 eine Ansicht auf das Zellenrad im Zusammenwirken mit einem Särad in Achsrichtung,

Fig. 4 einen Teilschnitt durch das Zellenrad im Bereich einer Zelle sowie durch die Rückwand in Umfangsrichtung und

Fig. 5 die Veränderung der Neigung des Bodens des Saatgutbehälters im Bezug auf das Zellenrad,

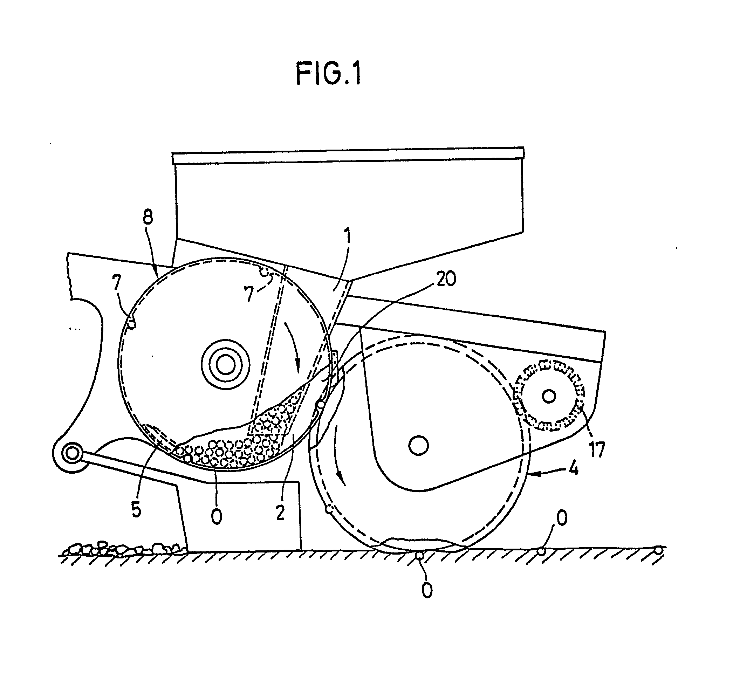

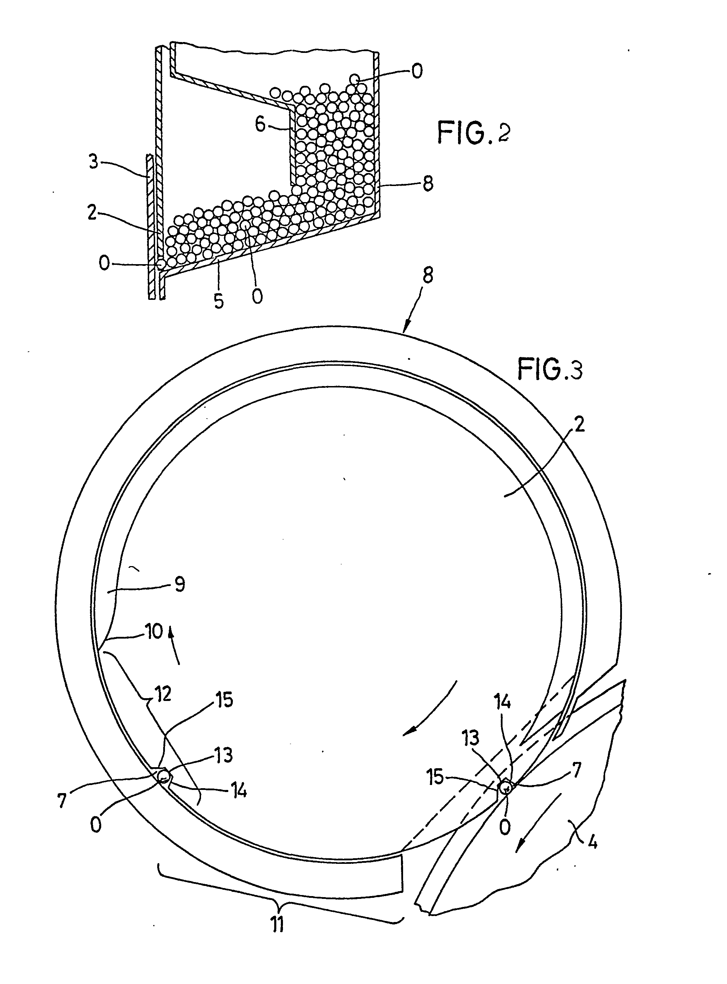

Die in Fig. 1 schematisch dargestellte Einzelkornsämaschine zeigt einen Saatgutbehälter 1, ein Zellenrad 2, eine das Zellenrad 2 auf der von dem Saatgutbehälter 1 abgewandten Seite abdeckende Rückwand 3 (Fig. 2) und ein mit dem Zellenrad 2 zusammenarbeitendes, um eine im wesentlichen horizontale Achse drehbar gelagertes Särad 4.

Der Saatgutbehälter 1 wird in seinem unteren Bereich durch einen Boden 5 begrenzt, der dort in Richtung auf das Zellenrad 2 nach unten geneigt verläuft. Mit Abstand über dem Boden 5 endet ein Leitblech 6, welches die Höhe des Saatkornvorrates am Zellenrad 2 begrenzt. Die Neigung des Bodens 5 führt dazu, daß die Saatkörner 0 bestrebt sind, sich in Richtung auf das Zellenrad 2 zu verlagern. Dadurch entsteht ein Andrücken der Saatkörner 0 an das Zellenrad 2.

Das Zellenrad 2 ist als eine Scheibe ausgebildet, deren Zellen 7 sich als Einschnitte darstellen, welche sowohl nach radial außen als auch in beiden Achsialrichtungen offen sind. Das um eine nicht dargestellte, im wesentlichen horizontale Achse drehbare Zellenrad 2 wird auf seiner von dem Saatgutbehälter 1 abgewandten Seite durch die Rückwand 3 abgedeckt. Nach radial außen hin werden die Zellen 7 durch das Gehäuse 8 abgeschlossen. Auf der dem Gehäuse 8 zugewandten Seite des Zellenrades 2 werden die Zellen 7 erst dort durch eine Abdekkung 9 abgedeckt, wo die Zellen 7 gegenüber der untersten Position um etwa 80° weitergedreht worden sind. Diese Abdeckung 9 beginnt mit einer allmählich von radial außen nach radial innen ansteigenden Vereinzelungskante 10.

Die Neigung des Bodens 5, die sich in einem spitzen Winkel zwischen diesem Boden 5 und dem Zellenrad 2 im unteren Bereich des Saatgutbehälters darstellt, verändert sich in Drehrichtung, indem der Winkel zwischen Boden 5 und Zellenrad 2 nach Durcheilen der Füllstrecke zunimmt. Dies bewirkt, daß die im unteren Bereich ein Eintreten der Saatkörner 0 in die Zellen 7 begünstigende Neigung in Drehrichtung mehr und mehr aufgehoben wird, um hier freien Raum für das Abwerfen der beim Vereinzelungsvorgang überschüssigen Saatkörner 0 zu schaffen und damit das Vereinzeln zu vereinfachen.

Fig. 5 zeigt die Veränderung des Neigungswinkels zwischen dem Boden 5 des Saatgutbehälters und dem Senkrechten des Zellenrads 2. In dem Bereich 11 liegt dabei die Neigung gleichbleibend bei 30°. In diesem Bereich 11 wird noch ein Befüllen der Zellen 7 angestrebt. In dem anschließenden Bereich 12 nimmt der Neigungswinkel ab, und das Abwerfen überzähliger Saatkörner 0 wird dadurch vereinfacht.

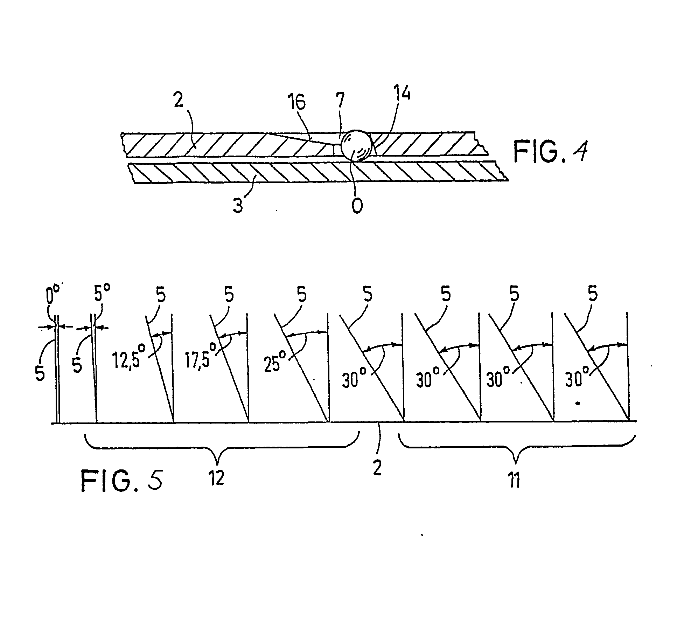

Die Zellen 7 haben eine Bodenfläche 13, eine (jeweils in Drehrichtung betrachtet) hintere Fläche 14 sowie eine vordere Fläche 15. Die hintere Fläche 14 bildet mit der Rückwand 3 einen Winkel von weniger als 90° (Fig. 4), um auf diese Weise ein einmal in eine Zelle 7 gelangtes Saatkorn 0 darin zu halten. In Drehrichtung vor jeder Zelle 7 liegt eine Schrägfläche 16, die in Richtung auf die Zelle 7 geneigt ist und auf diese Weise das Eintreten von Saatkörnern 0 in die Zellen 7 erleichtert (Fig. 4). Die vordere Fläche 15 verläuft in Drehrichtung geneigt (Fig. 3), so daß sich die in Umfangsrichtung gemessene Länge der Zellen 7 nach radial außen hin vergrößert.

Die Stärke oder Dicke des Zellenrades 2 ist geringer oder etwa gleich dem geringsten Durchmesser der auszusäenden Saatkörner 0. Dies bedeutet, daß die in einer Zelle 7 befindlichen Saatkörner 0 dann ergriffen werden können, wenn elastische Klemmelemente beiderseits des Zellenrades 2 im Bereich einer Zelle 7 angreifen.

Das Zellenrad 2 tritt bei 20 aus dem Gehäuse 8 heraus. Die Abdeckungen der Zellen 7, welche den äußeren Rand des Zellenrades 2 radial außen und seitlich umgeben, begleiten das Zellenrad 2 ein kleines Stück auch außerhalb des Gehäuses 8. Nun können die Saatkörner in das Erdreich abgeworfen oder von einem Särad übernommen werden, das sie zur Ablage ins Erdreich aufnimmt.

## Patentansprüche

1. Einzelkornsämaschine mit einem Saatgutbehälter (1) und mit einem scheibenförmigen, den Saatgutbehälter (1) auf einer Seite abgrenzenden Zellenrad (2), das an seinem Rand jeweils sowohl radial wie auch in beiden Axialrichtungen offene Zellen (7) zur Einzelaufnahme von Saatkörnern aufweist, das weitgehend von einem Gehäuse umschlossen um eine im wesentlichen horizontale Achse drehbar ist und das an seiner dem Saatgutbehälter (1) abgewandten Seite durch eine Rückwand (3) abgedeckt ist, wobei das Zellenrad (2) in einem unteren Füllbereich (11) die Saatkörner aufnimmt und unter innenseitigen Abdeckungen (9) bis zu einer Abgabestelle mitnimmt, dadurch gekennzeichnet, daß der Saatgutbehälter (1) einen in Richtung auf den unteren Bereich des Zellenrades (2) hin geneigt verlaufenden Boden (5) hat und daß der Winkel zwischen diesem Boden (5) des Saatgutbehälters (1) einerseits und dem Zellenrad (2) andererseits ausgehend vom Ende des Füllbereichs (11) bis zum Beginn (10) der innenseitigen Abdeckung (9) in Drehrichtung des Zellenrades (2) zunimmt.

2. Einzelkornsämaschine nach Anspruch 1, dadurch gekennzeichnet, daß der Winkel zwischen dem Boden (5) des Saatgutbehälters (1) einerseits und dem Zellenrad (2) andererseits von 60° bis 90° zunimmt.

3. Einzelkornsämaschine nach Anspruch 1 oder 2, dadurch gekennzeichnet, daß die in Drehrichtung des Zellenrades (2) hinten liegenden Flächen (14) der Zellen (7) mit der Rückwand (3) einen spitzen Winkel bilden.

4. Einzelkornsämaschine nach einem der vorhergehenden Ansprüche, dadurch gekennzeichnet, daß die in Drehrichtung des Zellenrades (2) vorn liegenden Flächen (15) und/oder die hinten liegenden Flächen der Zellen (7) in Drehrichtung abgeschrägt sind.

5. Einzelkornsämaschine nach einem der vorhergehenden Ansprüche, dadurch gekennzeichnet, daß in Drehrichtung vor jeder Zelle (7) auf der dem Saatgutbehälter (1) zugewandten Fläche des Zellenrades (2) eine Schrägfläche (16) vorgesehen ist, die in Richtung auf die Zelle (7) abfällt.

**Revendications**

1. L'invention consiste en une machine à ensemencer grain par grain avec un magasin à grain (1) et une roue cellulaire (2) en forme de disque qui fait jonction sur un côté au magasin à grain (1). Cette roue cellulaire (2) dispose sur sa circonférence aussi bien radialement que dans les deux direction axiales, de cellules ouvertes (7) destinées à recevoir les grains à semer et elle est en grande partie intégrée au boîtier autour d'un axe pour l'essentiel horizontal. Le côté opposé au magasin à grain (1) est habillé par un tablier (3). La roue cellulaire (2) reçoit la semence dans son domaine inférieur (11) et entraîne celle-ci sous des tabliers intérieurs (9) jusqu'au point de dépose. Cette machine à ensemencer grain par grain se distingue par le fait que le magasin à grain (1) est limité dans sa partie inférieure par un socle (5) qui marque à cet endroit une inclinaison vers le bas en direction de la roue cellulaire (2) et que l'angle augmente entre le socle (5) du magasin à grain (1) d'une part, et la roue cellulaire (2) d'autre part à partir du domaine de remplissage (11) jusqu'au début (10) du tablier intérieur (9) dans le sens de rotation de la roue cellulaire (2).

2. Machine à ensemencer grain par grain selon la revendication 1, caractérisée par le fait que l'angle forme par le socle (5) du magasin à grain (1) d'une part et la roue cellulaire (2) d'autre part, augmente de 60° jusqu'à 90°.

3. Machine à ensemencer grain par grain selon la revendication 1 ou 2, caractérisée par le fait que les surfaces dorsales (14) des cellules (7) vues dans le sens de rotation de la roue cellulaire (2) forment un angle aigu avec le tablier dorsal (3).

4. Machine à ensemencer grain par grain selon une des revendications précédentes, caractérisée par le fait que les surfaces frontales (15) et/ou les surfaces dorsales des cellules (7) sont biseautées en direction de la rotation de la roue cellulaire (2).

5. Machine à ensemencer grain par grain selon une des revendications précédentes, caractérisée par le fait que dans le sens de rotation devant chaque cellule (7), il y a sur le côté magasin à grain (1) de la roue cellulaire (2) un plan incliné (16) qui marque son inclinaison en direction de la cellule (7).

**Claims**

1. Single grain sowing machine with a seed container (1) and with a disc-shaped scoop wheel (2) limiting the seed container (1) on one side, which possesses at its edge scoops (7) which are open both radially and in both axial directions for taking up individual seed grains, which is largely surrounded by a housing and rotatable about an essentially horizontal axis and which is covered by a rear wall (3) on the side opposite the seed container (1), whereby the scoop wheel (2) takes up the seed grains in a lower filling sector (11) and carries them under interior covers (9) up to a delivery point, characterised in that the seed container (1) has a base (5) inclined in the direction of the lower sector of the scoop wheel (2) and that the angle between this base (5) and the seed container (1) on the one hand and the scoop wheel (2) on the other hand increases, starting from the end of the filling sector (11) up to the start (10) of the interior cover (9) in the direction of rotation of the scoop wheel (2).

2. Single grain sowing machine in accordance with claim 1, characterised in that the angle between the base (5) of the seed container (1) on the one hand and the scoop wheel (2) on the other hand increases from 60° to 90°.

3. Single grain sowing machine in accordance with claim 1 or 2, characterised in that the surfaces (14) of the scoops (7) lying at the rear in the direction of rotation of the scoop wheel form an acute angle with the rear wall (3).

4. Single grain sowing machine in accordance with one of the preceding claims, characterised in that the surfaces (15) located at the front in the direction of rotation of the scoop wheel (2) and/or the surfaces located at the rear of the scoops (7) are sloped in the direction of rotation.

5. Single grain sowing machine in accordance with one of the preceding claims, characterised in that in the direction of rotation in front of each scoop (7) on the surface of the scoop wheel (2) facing the seed container (1) a sloping surface (16) is provided which drops in the direction of the scoop (7).

# FIG.1

FIG.2

FIG.3

FIG. 4

FIG. 5